# EUROPEAN PATENT APPLICATION

(11) **EP 2 682 862 A2**
(43) Date of publication of application: **08.01.2014**
(21) Application number: 13174746.1
(22) Date of filing: 02.07.2013
(51) Int. Cl.: G06F 9/44

(54) **Apparatus and method for controlling e-book in terminal**

(30) Priority: 02.07.2012 KR 20120071802
(71) Applicant: Samsung Electronics Co., Ltd, Gyeonggi-do 443-742 (KR)
(72) Inventor: Mok, Ji-Eun, Suwon-si 443-742 Gyeonggi-do (KR); Kwak, ByeongHoon, Suwon-si 443-742 Gyeonggi-do (KR)
(74) Representative: Nederlandsch Octrooibureau

(57) **Abstract**

An apparatus and method for controlling an e-Book in a terminal are provided. The electronic-Book (e-Book) control apparatus of the terminal includes a controller configured to run at least one application related to data of an e-Book, while displaying the e-Book.

## Description

### BACKGROUND OF THE INVENTION

### Field of the Invention:

The present invention relates to an apparatus and method for controlling an electronic-Book (e-Book) in a terminal. More particularly, the present invention relates to an e-Book control apparatus and method capable of automatically running a variety of applications while displaying an e-Book in a terminal.

### Description of the Related Art:

Electronic-Books (e-Books) refer to digital books in which multimedia information such as characters and images is recorded in electronic media, allowing users to take advantage of the multimedia information, in a way similar to paper books.

An e-Book service is provided in such a manner that e-Book content is created by recording content of the works, which have been or may be published in books, in electronic media in the form of digital data, and the created e-Book content is transmitted to e-Book terminals such as computers and terminals over a wired/wireless information network.

Compared to paper books, the e-Books are lower cost, take less time to purchase due to being purchased online, allow for only desired sections to be purchased, and allow for e-Book content to be downloaded directly to a user's own Personal Digital Assistant (PDA), mobile terminal or the like to easily access desired e-Book content anytime anywhere.

With the help of the e-Books, publishing companies may save their production costs for printing, bookbinding, etc., content distribution costs, inventory costs, and costs for updating e-Book content.

The e-Books are now widely adopted due to the expansion of infrastructure, such as the development of wired/wireless communication networks and the establishment of electronic libraries (E-libraries) that lend e-Books.

The above information is presented as background information only to assist with an understanding of the present disclosure. No determination has been made, and no assertion is made, as to whether any of the above might be applicable as prior art with regard to the present invention.

### SUMMARY OF THE INVENTION

An object of the present invention is to address at least the above-mentioned problems and/or disadvantages and to provide at least the advantages described below. Accordingly, an aspect of the present invention is to provide an electronic-Book (e-Book) control apparatus and method capable of automatically running a variety of applications while displaying an e-Book in a terminal.

Another aspect of an exemplary embodiment of the present invention is to provide an e-Book control apparatus and method for a terminal, capable of more efficiently expressing an author's intention in an e-Book by authoring an e-Book supporting an application interworking function, and allowing a user to more easily understand the author's intention on an e-Book viewer by reading (or learning) the e-Book.

In accordance with an aspect of the present invention, an apparatus for controlling an e-Book in a terminal is provided. The apparatus comprises a controller configured to run at least one application related to data of an e-Book, while displaying the e-Book.

In accordance with another aspect of the present invention, an apparatus for controlling an e-Book in a terminal is provided. The apparatus comprises a controller configured to run at least one application in an execution screen window, if there is the at least one application related to data included in a page of the e-Book while controlling to display the e-Book on an e-Book viewer in an e-Book viewer mode. The execution screen window is fixedly displayed in a position where the execution screen window does not overlap data on the page of the e-Book, or is movably displayed overlapping data on the page of the e-Book.

In accordance with further another aspect of the present invention, a method for controlling an e-Book in a terminal is provided. The method comprises determining whether there is at least one application related to data of an e-Book, while displaying the e-Book, and running the at least one application while displaying the e-Book, if there is at least one application related to data of the e-Book.

In accordance with yet another aspect of the present invention, a method for controlling an e-Book in a terminal is provided. The method comprises determining whether there is at least one application related to data included in a page of the e-Book, while displaying the e-Book on an e-Book viewer in an e-Book viewer mode, and if there is at least one application related to data included in the page of the e-Book, running the at least one application in an execution screen window while displaying the e-Book. The execution screen window is fixedly displayed in a position where the execution screen window does not overlap data on the page the e-Book, or is movably displayed overlapping data on the page of the e-Book.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 shows a structure of a terminal according to an exemplary embodiment of the present invention;
FIG. 2 shows a process of authoring an electronic-Book (e-Book) in a terminal according to an exemplary embodiment of the present invention;
FIG. 3 shows a process of displaying an e-Book in a terminal according to an exemplary embodiment of the present invention;
FIG. 4 shows a process of running an application while displaying an e-Book in a terminal according to an exemplary embodiment of the present invention; and
FIGS. 5A and 5B show an operation of running an application while displaying an e-Book in a terminal according to an exemplary embodiment of the present invention.
Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Terminals, to which exemplary embodiments of the present invention are applicable, may include both mobile terminals and fixed terminals. The mobile terminals, which are easy-to-carry mobile electronic devices, may include video phones, mobile phones, smart phones, International Mobile Telecommunication-2000 (IMT-2000) terminals, Wideband Code Division Multiple Access (WCDMA) terminals, Universal Mobile Telecommunication Service (UMTS) terminals, Personal Digital Assistants (PDAs), Portable Multimedia Players (PMPs), Digital Multimedia Broadcasting (DMB) terminals, electronic-Book (e-Book) readers, portable computers (e.g., laptop computers, and tablet Personal Computers (PCs)), and digital cameras. The fixed terminals may include desktop PCs.

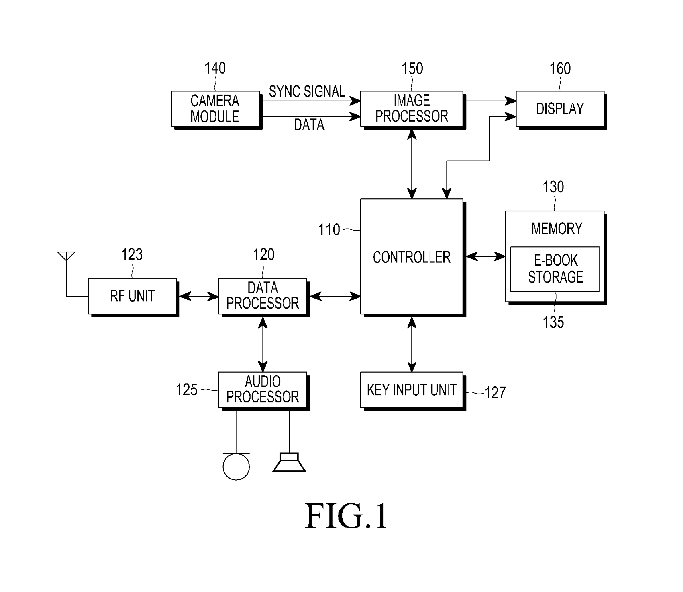

FIG. 1 shows a structure of a terminal according to an exemplary embodiment of the present invention.

Referring to FIG. 1, a Radio Frequency (RF) unit 123 is responsible for wireless communication of the terminal. The RF unit 123 includes an RF transmitter for up-converting a frequency of transmission signals and amplifying the up-converted transmission signals, and an RF receiver for low-noise-amplifying received signals and down-converting a frequency of the amplified received signals. A data processor 120 includes a transmitter for coding and modulating the transmission signals, and a receiver for demodulating and decoding the received signals. In other words, the data processor 120 may include a modulator/demodulator (modem) and a coder/decoder (codec). The codec includes a data codec for processing packet data and the like, and an audio codec for processing audio signals such as voice. An audio processor 125 plays received audio signals output from the audio codec in the data processor 120 using a speaker, and transfers transmission audio signals picked up by a microphone to the audio codec in the data processor 120.

A key input unit 127 includes numeric/character keys for inputting numeric/character information and function keys for setting various functions.

A memory 130 may include a program memory and a data memory. The program memory may store programs for controlling the general operation of the terminal, and programs for authoring an e-Book by linking or inserting at least one application to or into a page, and running or executing the at least one application while displaying the e-Book, according to an exemplary embodiment of the present invention. The data memory temporarily stores the data generated during execution of the programs.

The memory 130 may store a plurality of applications and at least one e-Book. The memory 130 includes an e-Book storage 135 that stores at least one application inserted into an e-Book and at least one application created to perform an interworking function with an e-Book viewer.

The at least one application inserted into an e-Book may include an application stored in the memory 130 (i.e., in the terminal) and used by a user, and an at least one application created to perform an interworking function with an e-Book viewer.

A controller 110 controls the overall operation of the controller.

In accordance with an exemplary embodiment of the present invention, if at least one application is linked to or directly inserted into a page while an e-Book is authored by the user in an e-Book authoring mode using an e-Book authoring tool, the controller 110 designates the at least one linked or inserted application as an application that can run in the page.

The application linked to or inserted into a page may be an application that is stored in the memory 130 of the terminal and used by the user, or an application newly created to perform an interworking function with an e-Book viewer.

A Toolkit Software Development Kit (SDK) may be supported to enable the user to newly create an application for performing an interworking function with the e-Book viewer.

The e-Book authoring tool and the e-Book viewer use a commonly-defined language. Therefore, in the e-Book authoring mode, the user may link or insert at least one application to or into a page using the language commonly supported by the e-Book authoring tool and the e-Book viewer.

The language that can be commonly supported by the e-Book authoring tool and the e-Book viewer includes the basic marked-up language such as Hypertext Markup Language 5 (HTML5).

Therefore, the user may use tags of the marked-up language which is a language commonly supported by the e-Book authoring tool and the e-Book viewer, in order to link or insert at least one application to or into his/her desired position in the e-Book, i.e., a page that may be needed for an access to data (e.g., texts, images, etc.) of the page.

In addition, a User Interface (UI) may be provided in which Synchronized Multimedia Integration Language (SMIL) files for video playback may be automatically edited, if media such as videos are inserted into a page of an e-Book using Media Overlays technology when at least one application is linked to or inserted into the page of the e-Book. In other words, a UI may be provided where the terminal may run an application at a specific point of time while playing videos on a page.

Currently, in electronic PUBlication (ePUB) which is an e-Book document file format, files support marked-up language and SMIL.

When a page is displayed, to or into which an application is linked or inserted, while the controller 110 displays an e-Book on an e-Book viewer in an e-Book viewer mode, the controller 110 may run the application in a predetermined position of the page. When the page is displayed, to or into which the application is linked or inserted, the controller 110 may perform automatic application execution, manual application execution, or no application execution depending on application execution conditions. When the application execution conditions correspond to the manual application execution, the controller 110 may display a UI (e.g., icon or button) indicating existence of a linked or inserted application, and run the application if the application is chosen by the user by inputting or touching the UI.

The application execution conditions may be set in an e-Book by default in the e-Book authoring mode. Therefore, in the e-Book viewer mode, the controller 110 may display the e-Book depending on the application execution conditions that are set by default. However, in the e-Book viewer mode, the user may change the application execution conditions during display of the e-Book.

If it is determined that there are at least two applications linked to or inserted into a page, while the controller 110 displays the e-Book in the e-Book authoring mode, the controller 110 may display types of the at least two linked or inserted applications in a predetermined position of the page, and run a selected application from among the displayed types of the at least two applications.

While displaying an e-Book in the e-Book viewer mode, the controller 110 may display and run the application in an execution screen window. The execution screen window may be fixedly located not to overlap the data displayed on a page of the e-Book, or may be movably located overlapping the data of the page. The controller 110 may use the fixed or movable execution screen window depending on the user's choice. The execution screen windows for running and displaying applications may be hidden or displayed depending on the user's choice.

When at least two applications are linked to or inserted into a page, while the controller 110 displays an e-Book in the e-Book viewer mode, the controller 110 may run and display a first application among the plurality of applications in an execution screen window, display UIs (e.g., icons or buttons) indicating types of the remaining applications in a predetermined position of the execution screen window, and run and display a desired application selected by the user by choosing the UI, in the execution screen window.

When the controller 110 runs at least one application while displaying an e-Book in the e-Book viewer mode, if the running application is determined as an application that can perform an interworking function with an e-Book viewer, the controller 110 may perform a data interworking function between the e-Book viewer and the application. The controller 110 may provide the data interworking function in which it extracts data applicable to the application from the page displayed on the e-Book viewer, automatically transmits the extracted data to the application and displays it, and the application transmits the resulting data for the data to the e-Book viewer and displays it on the page.

For example, the controller 110 may automatically apply a calculation problem on a page to a running calculator application and display the calculation problem, and if a calculation resulting value for the calculation problem is output from the calculator application, or if the calculator application terminates, the controller 110 may transmit the calculation result value to the e-Book viewer and display it on the page.

The controller 110 may also provide the data interworking function in which upon the occurrence of a specific gesture, the controller 110 copies, into an application, data on the page displayed on the e-Book viewer and displays the data, and if a specific function is performed on the copied data in the application, the controller 110 transmits the resulting data obtained by performing the specific function to the e-Book viewer and displays it on the page.

For example, if a specific gesture (e.g., a drag-and-drop or a double click) occurs after the user selects texts or images on a page, a running note application copies and displays the texts or images. If a specific function such as an editing function is performed on the copied texts or images in the note application, and user chooses 'Apply' or the note application terminates, then the controller 110 may transmit the texts or images on which the specific function is performed in the note application, to the e-Book viewer and display them on the page.

The running application capable of performing an interworking function with the e-Book viewer may include an application inserted into an e-Book stored in the e-Book storage 135, and an application created to perform an interworking function with the e-Book viewer.

A camera module 140 includes a camera sensor for capturing image data and converting the captured optical image signals into electrical image signals, and a signal processor for converting the analog image signals captured by the camera sensor into digital image data. The camera sensor may be a Charge-Coupled Device (CCD) sensor, a Complementary Metal-Oxide Semiconductor (CMOS) sensor, or any other suitable sensor, and the signal processor may be implemented with a Digital Signal Processor (DSP). The camera sensor and the signal processor may be implemented integrally or separately.

An image processor 150 performs Image Signal Processing (ISP) to display the image signals output from the camera module 140 on a display 160. The ISP may include gamma correction, interpolation, spatial variation, image effecting, image scaling, Auto White Balance (AWB), Auto Exposure (AE), Auto Focus (AF), and the like. The image processor 150 processes the image signals output from the camera module 140 on a frame-by-frame basis, and outputs the frame image data depending on the characteristics and size of the display 160. The image processor 150, which includes a video codec, may compress the frame image data displayed on the display 160 using a preset coding scheme, and decompress compressed frame image data into its original frame image data using a preset decoding scheme. The video codec may include a Joint Photographic Experts Group (JPEG) codec, a Moving Picture Experts Group-4 (MPEG4) codec, a Wavelet codec, etc. If the image processor 150 supports On Screen Display (OSD) features, it may output OSD data depending on the size of the displayed screen under control of the controller 110.

The display 160 displays, on its screen, image signals output from the image processor 150 and user data output from the controller 110. The display 160 may be a Liquid Crystal Display (LCD) display. In this case, the display 160 may include an LCD controller, a memory for storing image data, an LCD panel, and the like. When implemented to have a LCD touch screen, the display 160 may also serve as an input unit, and display the same keys as those on the key input unit 127.

In accordance with an exemplary embodiment of the present invention, the display 160 may display an application while displaying an e-Book in an e-Book viewer mode.

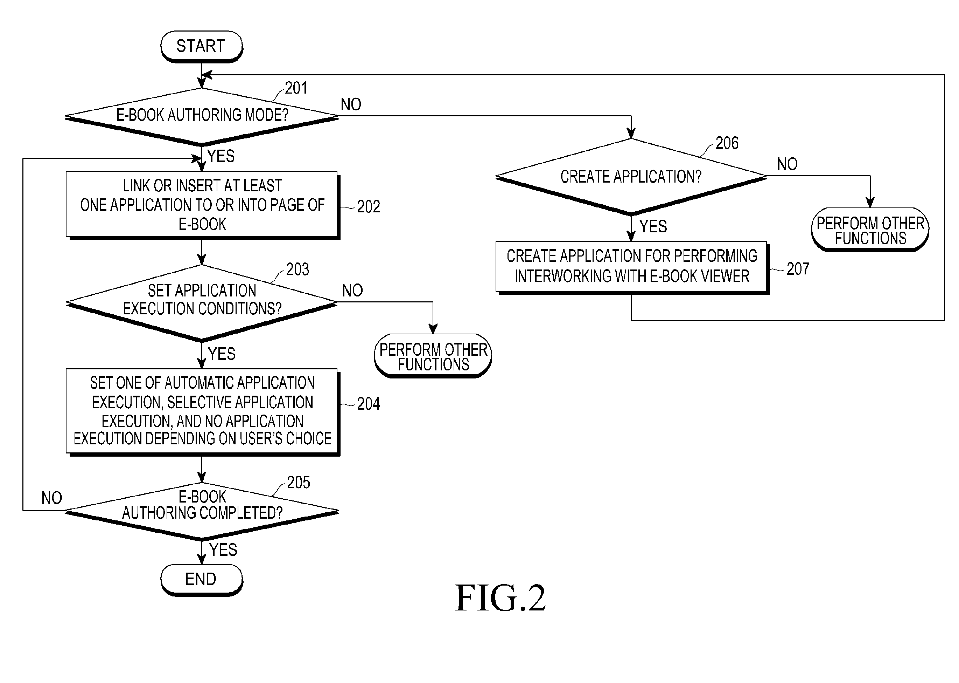

An operation of controlling an e-Book in the above-described terminal will be described in detail with reference to FIGS. 2 to 5B.

FIG. 2 shows a process of authoring an e-Book in a terminal according to an exemplary embodiment of the present invention.

The process shown in FIG. 2 will be described in detail below with reference to FIG. 1. Referring to FIG. 2, if 'Author e-Book' is chosen on the terminal by the user, the controller 110 switches to an e-Book authoring mode in step 201.

If the user links or inserts at least one application to or into his/her desired position (e.g., desired page) of an e-Book using tags of a language (e.g., marked-up language) supported by the e-Book authoring tool and the e-Book viewer, while authoring the e-Book in the e-Book authoring mode, the controller 110 determines the at least one linked or inserted application as an application that can run when the page of the e-Book is displayed in the e-Book viewer mode, in step 202.

If 'Set Application Execution Conditions' is not chosen by the user in step 203, the controller 110 performs another function. If 'Set Application Execution Conditions' is chosen by the user in step 203, the controller 110 displays automatic application execution, manual application execution, and no application execution, which are types of the application execution conditions. In step 204, the controller 110 sets at least one selected application execution condition from among the displayed types of the application execution conditions as an application execution condition that the user may choose when the controller 110 displays the e-Book in the e-Book viewer mode. For example, if all of the automatic application execution, the manual application execution and the no application execution, which are types of the application execution conditions, are chosen, the user may be provided with the three selectable application execution conditions in the e-Book viewer mode.

In step 204, when the at least one application execution condition is chosen by the user, the controller 110 may automatically or manually set it as a default application execution condition. Therefore, the controller 110 runs an application(s) on the default application execution condition when displaying an e-Book in the e-Book viewer mode, and in the e-Book viewer mode, the user may switch the terminal to another set application execution condition.

If 'Complete e-Book Authoring' is chosen by the user in step 205 while the controller 110 authors an e-Book in steps 201 to 204, the controller 110 authors an e-Book in an ePUB document file format. If 'Complete e-Book Authoring' is not chosen by the user in step 205, the controller 110 returns to step 202.

In step 202, the at least one application linked to or inserted into the page of the e-Book may be an application that is already stored in the terminal and used by the user, or an application created to perform an interworking function with an e-Book viewer.

If 'Create Application' is chosen by the user to newly create an application for performing an interworking function with the e-Book viewer in step 206, the controller 110 creates an application capable of performing an interworking function with the e-Book viewer in step 207. If 'Create Application' is not chosen by the user in step 206, the controller 110 performs another function.

In step 207, the controller 110 may automatically create an application capable of performing an interworking function with the e-Book viewer, using Toolkit SDK provided in the terminal, and the created application capable of performing an interworking function with the e-Book viewer is stored in the e-Book storage 135.

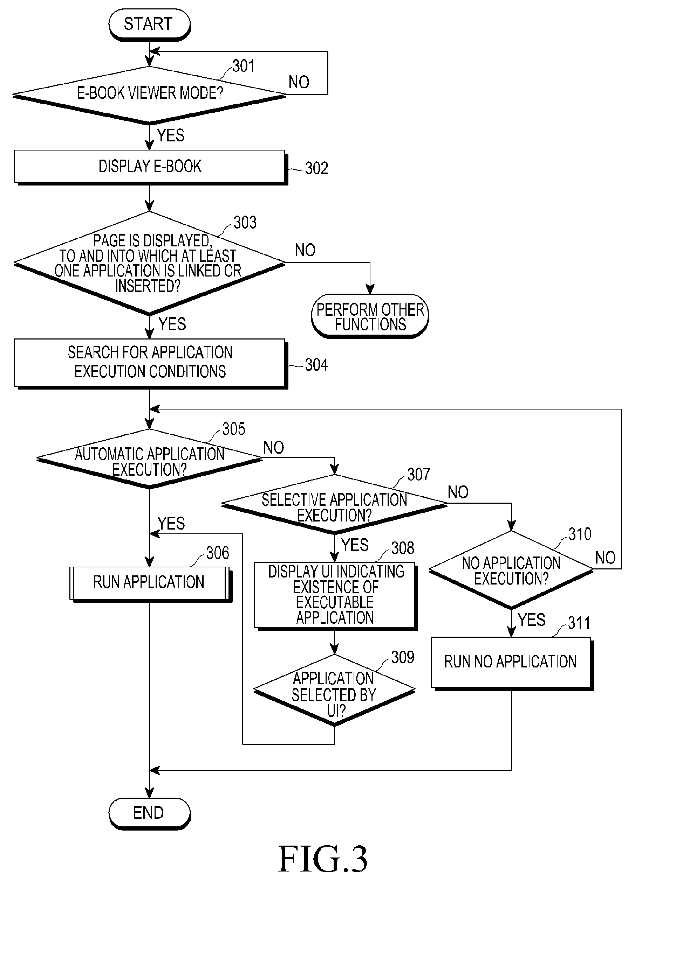

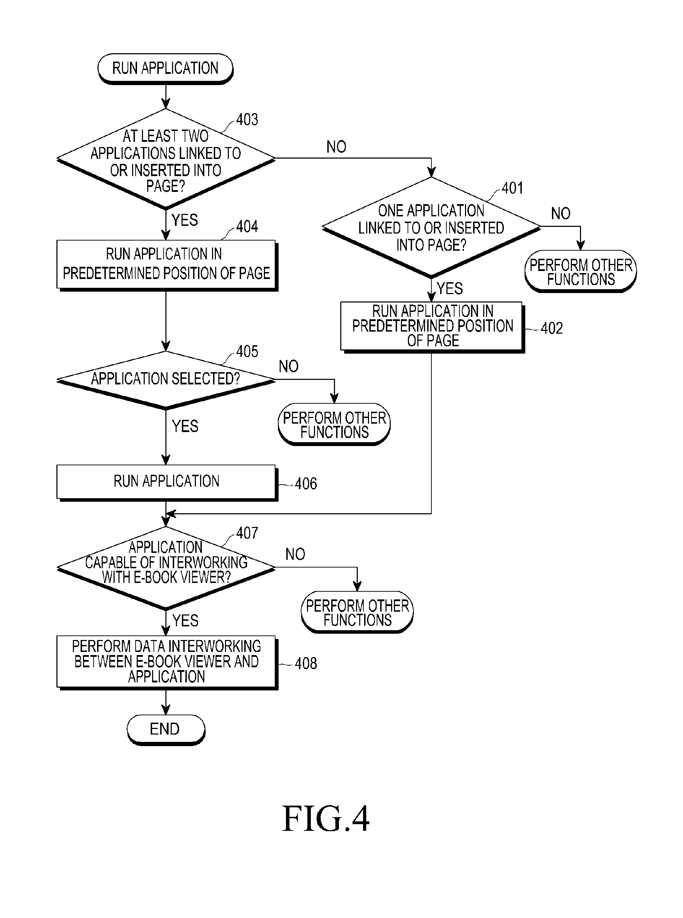

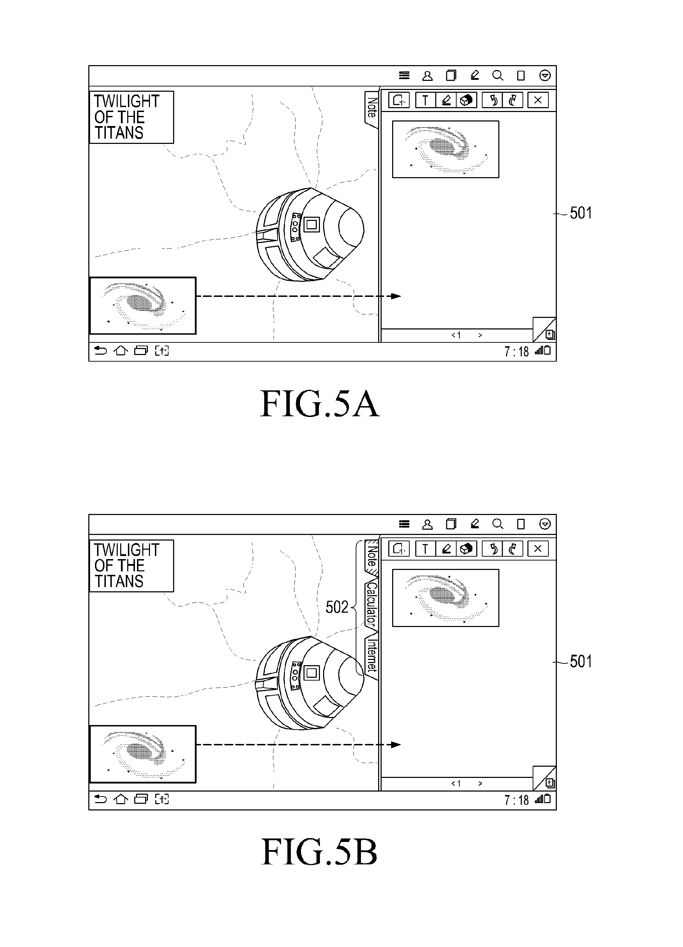

FIG. 3 shows a process of displaying an e-Book in a terminal according to an exemplary embodiment of the present invention. FIG. 4 shows a process of running an application while displaying an e-Book in a terminal according to an exemplary embodiment of the present invention. FIGS. 5A and 5B show an operation of running an application while displaying an e-Book in a terminal according to an exemplary embodiment of the present invention.

The processes and operation shown in FIGS. 3 to 5B will be described in detail below with reference to FIG. 1.

Referring to FIG. 3, if the user chooses an e-Book viewer mode in step 301 to view the e-Book that was authored with the e-Book authoring tool in the e-Book authoring mode as shown in FIG. 2, the controller 110 switches to an e-Book viewer mode.

In step 302, the controller 110 displays a selected e-Book from among the e-Books stored in the memory 130, on the e-Book viewer in the e-Book viewer mode.

While displaying the e-Book on the e-Book viewer, the controller 110 determines in step 303 whether there is an application linked to or inserted into a page.

If there is not an application linked to or inserted into the page, the controller 110 performs another function. If there is an application linked to or inserted into the page, the controller 110 searches for application execution conditions in step 304.

If the application execution conditions are set in advance or by the user as automatic application execution in step 305, the controller 110 runs the application in a predetermined position of the page in step 306. A process of automatically running an application in step 306 will be described in detail with reference to FIG. 4.

If the application execution conditions are set in advance or by the user as manual application execution in step 307, the controller 110 displays a UI indicating the existence of an executable application(s) on the page in step 308. In step 308, the UI, the number of which corresponds to the number of linked or inserted applications, is an icon or button indicating the type of the application and may be displayed in a predetermined position of the e-Book viewer.

If the user selects the application by choosing a UI (e.g., icon or button) indicating the existence of an executable application on the page in step 309, the controller 110 runs the application in the predetermined position of the page in step 306.

If the application execution conditions are set in advance or by the user as no application execution in step 310, the controller 110 runs no application in step 311 despite the existence of an executable application in the page. If the application execution conditions are not set in advance or by the user as no application execution in step 310, the controller 110 returns to step 305.

The process of running an application in the e-Book viewer mode in step 306 will be described with reference to FIG. 4. If the number of applications linked to or inserted into the page is one in step 401, the controller 110 runs the application in the predetermined position of the page in step 402. Otherwise, the controller 110 performs another function.

In step 402, the controller 110 may display and run the application in an execution screen window. The execution screen window may be fixedly located so as not to overlap the data displayed on the page, or may be movably located overlapping the data of the page. The controller 110 may use the fixed or movable execution screen window depending on the user's choice.

As shown in FIG. 5A, the controller 110 may run and display a linked or inserted Note application in an execution screen window 501 in a position where it overlaps data of the page, in a predetermined position of the page of the e-Book in the e-Book viewer mode.

However, if the number of applications linked to or inserted into the page is at least two in step 403, the controller 110 displays types of the applications in a predetermined position of the page in step 404.

In step 404, the controller 110 may run and display a first application from among the plurality of applications in the execution screen window for running and displaying applications, and may display UIs (e.g., icons or buttons) indicating types of the remaining applications in a predetermined position of the execution screen window. As shown in FIG. 5B, the controller 110 may run and display a Note application, which is the first application among the plurality of linked or inserted applications, in the execution screen window 501 in the position where it overlaps data of the page, in a predetermined position of the page of the e-Book in the e-Book viewer mode, and may display UIs (e.g., icons or buttons) indicating types of the remaining applications (e.g., calculator and Internet applications) in a predetermined position 502 of the execution screen window.

If the user selects the application, or selects the remaining applications except for the first application being displayed in the execution screen window by choosing their UIs in step 405 while the controller 110 displays UIs indicating only types of the plurality of applications in step 404, then the controller 110 runs the selected application in step 406.

If the application is run and displayed in a predetermined position of the page while the controller 110 displays the e-Book on the e-Book viewer, the controller 110 determines in step 407 whether the running application is an application capable of performing an interworking function with the e-Book viewer, i.e., whether the running application is an application linked to or inserted into the e-Book or an application capable of performing an interworking function with the e-Book viewer. If the running application is not an application capable of performing an interworking function with the e-Book viewer in step 407, the controller 110 performs another function.

If the running application is an application capable of performing an interworking function with the e-Book viewer in step 407, the controller 110 performs a data interworking function between the e-Book viewer and the running application in step 408.

For example, if calculation characters are included in the page and a calculator application is run while the controller 110 displays the e-Book in the e-Book viewer mode, the controller 110 transfers the calculation problem on the e-Book viewer to the calculator application and automatically displays it. If the calculator application calculates the calculation problem and outputs the resulting value, the controller 110 may immediately transfer the resulting value to the e-Book viewer and display it on the page, or if the calculator application terminates, the controller 110 may transfer the resulting value to the e-Book viewer and display it on the page in a position corresponding to the calculation problem.

Not only for the calculation problems but also for quizzes, while performing an interworking function with an Internet application, the e-Book viewer may transfer quizzes on the page to the Internet application, and the Internet application may transfer the extracted quiz resulting values to the e-Book viewer, and display them on the page. For example, as shown in FIG. 5A and SB, if an image is chosen by the user in the page and then copied into a Node application through a specific gesture (e.g., a drag-and-drop) while the controller 110 displays an e-Book in the e-Book viewer mode, the controller 110 transfers the image from the e-Book viewer to the Node application and displays it as a copied image. If 'Complete' is chosen by the user after an editing function is performed on the image in the Node application, or if 'Save' is chosen by the user for the edited image when the Node application terminates, the controller 110 may transfer the image that underwent the editing function in the Node application, to the e-Book viewer and display it in the page in a position corresponding to the image. When an application, which is stored and used in the terminal, is linked to a page and run in the e-Book viewer, the user should directly input needed information to the application as it is merely run and displayed. However, when performing the above interactive data sharing function, the e-Book viewer and the application may automatically exchange designated data with each other.

The proposed e-Book control apparatus and method for terminals may be implemented in a non-transitory computer-readable recording medium with computer-readable codes. The non-transitory computer-readable recording medium may include all kinds of recording devices storing computer-readable data. Examples of the non-transitory computer-readable recording medium may include Read-Only Memory (ROM), Radom Access Memory (RAM), optical disk, magnetic tape, floppy disk, hard disk, nonvolatile memory, etc. The non-transitory computer-readable recording medium is distributed over the computer systems connected by the network, so that computer-readable codes may be stored and executed in a distributed manner.

As is apparent from the foregoing description, the e-Book control apparatus and method proposed by the present disclosure may automatically run a variety of applications while displaying an e-Book. In addition, the proposed e-Book control apparatus and method may more efficiently express an author's intention in an e-Book by authoring an e-Book supporting an application interworking function, and may allow users to more easily understand the author's intention on an e-Book viewer by reading (or learning) the e-Book.

Besides, the proposed e-Book control apparatus and method may more efficiently reflect the user's intention in the e-Book in a variety of ways, increase user convenience due to its simplified procedure, and contribute to an increase in demands in the field of learning and electronic publishing.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. An apparatus for controlling an electronic-Book (e-Book) in a terminal, the apparatus comprising:
a controller (110) configured to run at least one application in an execution screen window, if there is the at least one application related to data included in a page of the e-Book while controlling to display the e-Book on an e-Book viewer in an e-Book viewer mode,
wherein the execution screen window is fixedly displayed in a position where the execution screen window does not overlap data on the page of the e-Book, or is movably displayed overlapping data on the page of the e-Book.

2. The apparatus of claim 1, wherein, if at least one application related to data included in a page of the e-Book is linked to or inserted into the page of the e-Book while the e-Book is authored using an e-Book authoring tool in an e-Book authoring mode, the controller is configured to run the linked or inserted application when the page of the e-Book is displayed,
wherein the at least one application is linked to or inserted into the page of the e-Book using a language supported by the e-Book authoring tool, and
wherein the language supported by the e-Book authoring tool includes a marked-up language.

3. The apparatus of claim 1, wherein the controller (110) is configured to:
determine application execution conditions if there is at least one application related to data included in a page of the e-Book;
run the at least one application in a predetermined position of the page, if the application execution conditions correspond to automatic application execution;
control to display a User Interface (UI) indicating existence of an application related to data included in the page of the e-Book if the application execution conditions correspond to the manual application execution, and runs the application in a predetermined page of the page if the application is selected by the UI; and
run no application if the application execution conditions correspond to no application execution.

4. The apparatus of claim 3, wherein, if there are at least two applications related to data included in the page of the e-Book, the controller is configured to control to display types of the at least two applications in a predetermined position of the page, and runs a selected application from among the displayed types of the at least two applications.

5. The apparatus of claim 10, wherein the controller (110) is configured to determine whether the running application is an application that can perform an interworking function with the e-Book viewer, and provides a data interworking function between the e-Book viewer and the application if the running application is an application capable of performing an interworking function with the e-Book viewer.

6. The apparatus of claim 14, wherein the controller is configured to automatically transfer data applicable to the application, to the application to control to display the data in the page of the e-Book displayed on the e-Book viewer, and
wherein the controller is configured to control the application to transfer resulting data for the data to the e-Book viewer to control to display the resulting data on the page.

7. The apparatus of claim 14, wherein upon occurrence of a specific gesture, the controller is configured to copy data included in the page of the e-Book displayed on the e-Book viewer into the application to control to display the copied data, and the controller is configured to control the application to transfer resulting data generated by performing a specific function on the copied data, to the e-Book viewer to control to display the resulting data on the page.

8. A method for controlling an electronic-Book (e-Book) in a terminal, the method comprising:
determining whether there is at least one application related to data included in a page of the e-Book, while displaying the e-Book on an e-Book viewer in an e-Book viewer mode; and
if there is at least one application related to data included in the page of the e-Book, running the at least one application in an execution screen window while displaying the e-Book,
wherein the execution screen window is fixedly displayed in a position where the execution screen window does not overlap data on the page the e-Book, or is movably displayed overlapping data on the page of the e-Book.

9. The method of claim 8, further comprising linking or inserting at least one application related to data included in a page of the e-Book (202), to or into the page of the e-Book, while authoring the e-Book in an e-Book authoring mode using an e-Book authoring tool,
wherein the at least one application is linked to or inserted into the page of the e-Book using a language supported by the e-Book authoring tool, and
wherein the language supported by the e-Book authoring tool includes a marked-up language.

10. The method of claim 8, wherein the running comprises:
determining application execution conditions if there is at least one application linked to or inserted into a page of the e-Book (304);
if the application execution conditions correspond to automatic application execution, running the at least one application in a predetermined position of the page (306);
if the application execution conditions correspond to manual application execution (307), displaying a User Interface (UI) indicating existence of an application related to data included in the page of the e-Book (308), and running the application in a predetermined position of the page if the application is selected by the UI; and
if the application execution conditions correspond to no application execution (310), running no application (311).

11. The method of claim 8, wherein the running comprises:
if there are at least two applications linked to or inserted into a page of the e-Book (403), displaying types of the at least two applications in a predetermined position of the page; and
running a selected application from among the displayed types of the at least two applications.

12. The method of claim 8, wherein the running comprises:
determining whether the running application is an application capable of performing an interworking function with an e-Book viewer (407); and
providing a data interworking function between the e-Book viewer and the application (408), if the application is an application capable of performing an interworking function with the e-Book viewer.

13. The method of claim 12, wherein the providing of the data interworking function comprises:
automatically transferring data applicable to the application, to the application to display the data in a page displayed on the e-Book viewer; and
transferring, by the application, resulting data for the data to the e-Book viewer to display the resulting data on the page.

14. The method of claim 12, wherein the providing of the data interworking function comprises:
copying data of the page displayed on the e-Book viewer into the application to display the copied data, upon occurrence of a specific gesture; and
transferring, by the application, resulting data generated by performing a specific function on the copied data, to the e-Book viewer to display the resulting data on the page.
